# EUROPEAN PATENT APPLICATION

(11) **EP 3 393 146 A1**
(43) Date of publication of application: **24.10.2018**
(21) Application number: 17188790.4
(22) Date of filing: 31.08.2017
(51) Int. Cl.: H04W 4/00, G06Q 30/06, H04W 4/80

(54) **SHARED VEHICLE POSITIONING METHOD AND APPARATUS AND TERMINAL DEVICE**

(30) Priority: 17.04.2017 CN 201710249179
(71) Applicant: Beijing Mobike Technology Co., Ltd., Beijing 100083 (CN)
(72) Inventor: WANG, Depi, Beijing 100083 (CN)
(74) Representative: Hübner, Gerd

(57) **Abstract**

The present invention discloses a shared vehicle positioning method and apparatus, and a terminal device. The positioning method comprises: detecting if there is a locking action of a current shared vehicle; if yes, acquiring current position information of a terminal device using the current shared vehicle; and uploading the current position information to a server so that the server determines a locking position of the current shared vehicle based on the current position information. Using the positioning method of the present invention, a shared vehicle without a GPS positioning module can be positioned. In this way, the hardware cost and power consumption of the shared vehicle can be reduced, the service time of the battery of the shared vehicle can be extended, and the followed maintenance cost of the shared vehicle can be reduced as well.

## Description

### FIELD OF THE INVENTION

The present invention relates to the technical field of shared vehicle positioning, and more particularly to a shared vehicle positioning method and apparatus, and a terminal device.

### BACKGROUND OF THE INVENTION

At present, as people become more environmentally conscious, an increasing number of shared vehicles emerge in the market. A present shared vehicle is usually provided with a GPS positioning module, a communication module, and a battery. The battery is configured for supplying power to functional modules in the shared vehicle, to ensure the functional modules operate normally. The communication module may send, to a server in real time, position information collected by the GPS module, and the server determines, according to position information received when the shared vehicle is locked, a position at which the shared vehicle is locked.

However, the GPS positioning module arranged on the shared vehicle increases the hardware cost of the shared vehicle, and also increases power consumption of the battery, which reduces the service life of the battery, and further increases the maintenance cost of the shared vehicle. If the GPS positioning module is not arranged on the shared vehicle, the position of the shared vehicle cannot be determined. As a result, a user cannot find the shared vehicle quickly, and user experience is affected.

Therefore, there is a demand in the art that a new solution for positioning method shall be proposed to address at least one of the problems in the prior art.

### SUMMARY OF THE INVENTION

One object of this invention is to provide at least one new technical solution that can solve at least one of the above problems.

According to a first aspect of the present invention, there is provided a shared vehicle positioning method, which comprises: detecting if there is a locking action of a current shared vehicle; if yes, acquiring current position information of a terminal device using the current shared vehicle; and uploading the current position information to a server so that the server determines a locking position of the current shared vehicle based on the current position information.

Alternatively or optionally, the step of detecting if there is a locking action of a current shared vehicle comprises: detecting if a first instruction for terminating vehicle use sent by the server is received, wherein the first instruction for terminating vehicle use is triggered when the current shared vehicle sends locking information to the server.

Alternatively or optionally, the step of detecting if there is a locking action of a current shared vehicle further comprises: detecting if locking state information sent by the current shared vehicle to the terminal device is received.

Alternatively or optionally, the step of detecting if there is a locking action of a current shared vehicle further comprises: detecting if a second instruction for terminating vehicle use input into the terminal device by a user is received.

According to the second aspect of the present invention, there is provided a current shared vehicle positioning apparatus, which comprises: a detecting module configured for detecting if there is a locking action of a current shared vehicle; a position acquiring module configured for acquiring current position information of a terminal device using the current shared vehicle if a detection result of the detecting module is yes; and a position uploading module configured for uploading the current position information to a server so that the server determines a locking position of the current shared vehicle based on the current position information.

Alternatively or optionally, the detecting module is further configured for detecting if a first instruction for terminating vehicle use sent by the server is received, wherein the first instruction for terminating vehicle use is triggered when the current shared vehicle sends locking information to the server.

Alternatively or optionally, the detecting module is further configured for detecting if locking state information sent by the current shared vehicle to the terminal device is received.

Alternatively or optionally, the detecting module is further configured for detecting if a second instruction for terminating vehicle use input into the terminal device by a user is received.

According to the third aspect of the present invention, there is provided a terminal device including the positioning apparatus according to the second aspect of the present invention.

According to the fourth aspect of the present invention, there is provided a terminal device comprising a memory and a processor, wherein the memory stores instructions for controlling the processor to perform operations to execute the positioning method according to the first aspect of the present invention.

One advantageous effect of the present invention is that, using the positioning method of the present invention, a shared vehicle without a GPS positioning module can be positioned. In this way, the hardware cost and power consumption of the shared vehicle can be reduced, the service time of the battery of the shared vehicle can be extended, and the followed maintenance cost of the shared vehicle can be reduced as well.

Further features of the present invention and advantages thereof will become apparent from the following detailed description of exemplary embodiments according to the present invention with reference to the attached drawings.

### BRIEF DISCRIPTION OF THE DRAWINGS

The accompanying drawings, which are incorporated in and constitute a part of the specification, illustrate embodiments of the invention and, together with the description thereof, serve to explain the principles of the invention.
Fig. 1 is a flow chart of the shared vehicle positioning method according to an embodiment of the present invention.
Fig. 2 is a block diagram of an implementation structure of the shared vehicle positioning apparatus according to an embodiment of the present invention.
Fig. 3 is a block diagram of a terminal device according to an implementation structure of the present invention.
Fig. 4 is a schematic diagram of the overall structure of a shared vehicle system according to an embodiment of the present invention.

### DETAILED DESCRIPTION OF THE EMBODIMENTS

Various exemplary embodiments of the present invention will now be described in detail with reference to the drawings. It should be noted that the relative arrangement of the components and steps, the numerical expressions, and numerical values set forth in these embodiments do not limit the scope of the present invention unless it is specifically stated otherwise.

The following description of at least one exemplary embodiment is merely illustrative in nature and is in no way intended to limit the invention, its application, or uses.

Techniques, methods and apparatus as known by one of ordinary skill in the relevant art may not be discussed in detail but are intended to be part of the specification where appropriate.

In all of the examples illustrated and discussed herein, any specific values should be interpreted to be illustrative only and non-limiting. Thus, other examples of the exemplary embodiments could have different values.

Notice that similar reference numerals and letters refer to similar items in the following figures, and thus once an item is defined in one figure, it is possible that it need not be further discussed for following figures.

### <Overall structure of a shared vehicle system>

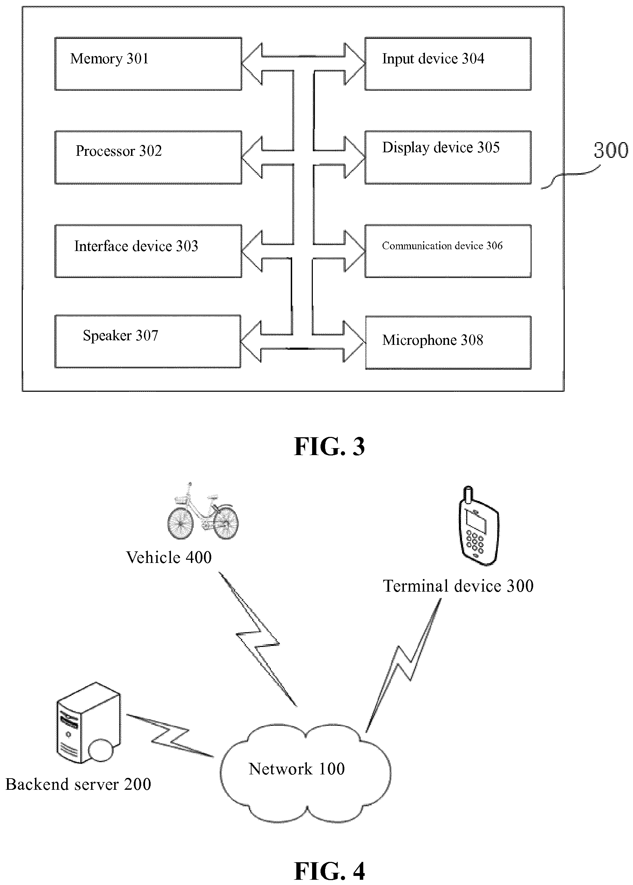

Fig. 4 is a schematic drawing of the overall structure of a shared vehicle system according to an embodiment of the present invention.

As shown in Fig. 4, the shared vehicle system may include a terminal device 300, a backend server 200 and a vehicle 400, the three of which may establish communication connections with one another via a wireless network 100.

The vehicle 400 includes a two-dimensional code and/or a code for uniquely identifying a corresponding vehicle.

The user may scan the two-dimensional code of the vehicle 400 via the terminal device 300, and send the two-dimensional code information to the backend server 200 to perform an unlocking operation.

The user may also input or recognize the code of the vehicle 400 via the terminal device 300, and send the code information to the backend server 200 to perform an unlocking operation.

When the user scans the two-dimensional code of the vehicle 400 or input the code thereof via the terminal device 300, the user needs to use a function of the terminal device 300, such as a flashlight function or a camera function of the terminal device 300.

In the present invention, the terminal device 300 may send or receive signals via a wired or wireless network for example, or may process the signals in a memory for example, or store the signals in a physical storage state. Each terminal device may be an electronic device including hardware, software or an inbuilt logic assembly or two or more of such assemblies, and used to execute suitable functions implemented or supported by the terminal device. For example, the terminal device may be a smart cell phone, a tablet computer, a portable email device, an electronic book, a handheld gaming machine and/or game controller, a notebook computer, an Internet surfing computer, a handheld electronic device, a smart wearable device or the like. The present invention covers any suitable terminal device. The terminal device may enable its user to access a network.

The terminal device 300 may include a processing device including an application processing part and a radio frequency/digital signal processor, and may include a memory device including a ROM, a RAM, a flash memory or any combination thereof.

In addition, various client applications may be installed in the terminal device 300 to allow the terminal device 300 to transmit commands suitable for operations with other devices. Such applications may be downloaded from a server and may be installed in the memory of or preinstalled in the terminal device 300. In the present invention, the terminal device 300 is installed with a vehicle client terminal application which can help the user use the functions of the vehicle 400.

In the present invention, the backend server 200 is a server. The server in this description should be understood as a service point providing processing, database and communication facilities. For example, the server may be a single physical processor including related communication, data storage and database facilities, or a networked or clustered processor, or a cluster of related networks and storage devices, and can operate software, one or more database systems and application software supporting services provided by the server. The servers may vary greatly in configuration or performance, but generally the server may include one or more central processing units and memories. The server further include one or more large-volume storage devices, one or more power sources, one or more wired or wireless network interfaces, one or more input/output interfaces, one or more operating systems such as Windows Server, Mac OS X, Unix, Linux and FreeBSD, and the like. Specifically, the backend server 200 may be an integral server or a distributed server across multiple computers or computer data centers. The server may include various servers, such as but not limited to a network server, a news server, a mail server, a message server, an advertisement server, a file server, an application server, an interactive server, a database server or a proxy server. In some embodiments, each server may include hardware, software or an inbuilt logic assembly or two or more of such assemblies used to execute suitable functions supported by the server. In the present invention, the backend server 200 is used to provide all functions required to support the use of the vehicle.

In the present invention, the vehicle 400 may be a bicycle, a tricycle, an electric scooter, a motor cycle, a four-wheeled vehicle or the like.

In the present invention, the wireless network 100 covers any suitable wireless network, such as but not limited to a 4G network, a 3G network, a GPRS network, a Wi-Fi network or the like. In addition, the wireless network coupling the backend server 200 and the terminal device 300 and the wireless network coupling the backend server 200 and the vehicle 400 may be the same or different.

A shared vehicle positioning method is provided to solve the problems in the prior art that arranging a GPS positioning module on a shared vehicle increases the hardware cost of the shared vehicle and power consumption of the battery.

The shared vehicle is a vehicle sharing service provided by an enterprise in campuses, metro stations, bus stations, residential areas, commercial districts, public service areas, and the like, and is used in a time-sharing rental mode. The shared vehicle in the present invention may be, for example, a shared bicycle, a shared electric scooter, or a shared automobile.

In the prior art, a user may scan a two-dimensional code or manually input a code to unlock and use the shared vehicle. When the user terminates use of the shared vehicle, that is, locks the shared vehicle, a server needs to acquire a locking position of the shared vehicle, to display the locking position on a vehicle map, so that the shared vehicle in locked state can be found and used by all users.

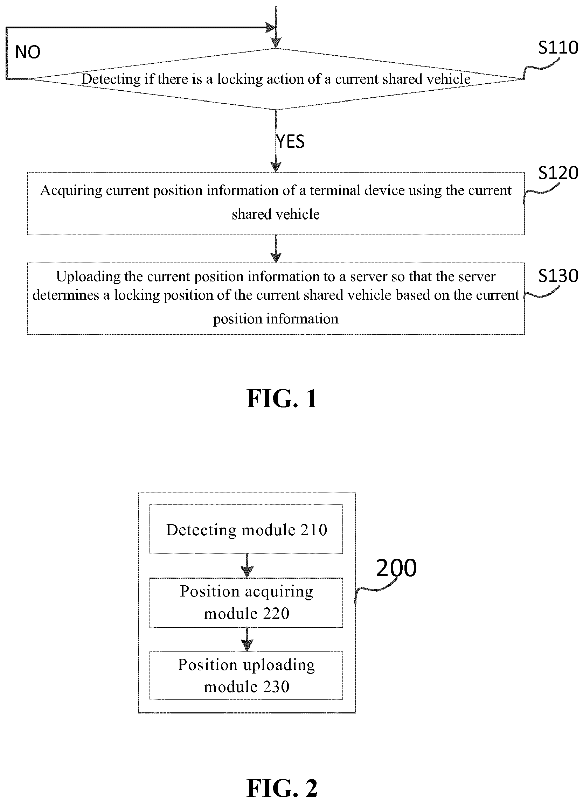

FIG. 1 is a flow chart of a shared vehicle positioning method according to an embodiment of the present invention.

As shown in FIG. 1, the positioning method includes the following steps.

In step S110, whether there is a locking action of a current shared vehicle is detected. If yes, step S120 is performed. If not, step S110 may be performed again.

In a first embodiment of the present invention, the step of detecting if there is a locking action of a current shared vehicle may be: detecting if a first instruction for terminating vehicle use sent by a server is received, wherein the first instruction for terminating vehicle use is triggered when the current shared vehicle sends locking information to the server.

Specifically, the current shared vehicle is provided with a communication module configured for communicating with the server, and the communication module may communicate with the server by means of, for example, Wi-Fi or GPRS. When there is a locking action, the current shared vehicle may send locking state information to the server by means of Wi-Fi or GPRS. When receiving the locking state information, the server sends the first instruction for terminating vehicle use using a terminal device of the current shared vehicle. The server may further charge according to a service time or travel distance of the current shared vehicle, and send expense information to the terminal device. After receiving the first instruction for terminating vehicle use, the terminal device may display information for terminating vehicle use on a display interface. The terminal device further displays the received expense information, to prompt a user to make a payment.

In a second embodiment of the present invention, detecting if there is a locking action of a current shared vehicle may further be: detecting if the locking state information sent by the current shared vehicle to the terminal device is received.

Further, the current shared vehicle may be provided inside with a Bluetooth module, so that the shared vehicle may communicate with the terminal device by means of Bluetooth. When there is a locking action, the current shared vehicle may send the locking state information to the terminal device by means of Bluetooth. After receiving the locking state information, the terminal device sends a travel termination request to the server. After receiving the travel termination request, the server may further charge according to a service time or travel distance of the current shared vehicle, and send expense information to the terminal device. The terminal device displays the information of terminating vehicle use and the expense information, to prompt the user to make a payment.

In a third embodiment of the present invention, detecting if there is a locking action of a current shared vehicle may further be: detecting if a second instruction for terminating vehicle use input into the terminal device by the user is received.

On the basis of above, when being locked, the current shared vehicle may not communicate with the terminal device or the server. Instead, the user using the current shared vehicle inputs the second instruction for terminating vehicle use into the terminal device. After receiving the second instruction for terminating vehicle use, the terminal device sends a travel termination request to the server. After receiving the travel termination request, the server may further charge according to a service time or travel distance of the shared vehicle, and send expense information to the terminal device. The terminal device displays the information of terminating vehicle use and the expense information, to prompt the user to make a payment.

In all of the above manners, the terminal device can detect the locking action of the shared vehicle.

In step S120, the current position information of a terminal device using the current shared vehicle is acquired.

Because the locking action is performed by the current user using the current shared vehicle, and the terminal device is carried by the user, when there is a locking action of the current shared vehicle, the positions of the user, the terminal device, and the current shared vehicle are basically the same. As an existing terminal device usually has a positioning function, position information of the terminal device may be used as the position information of the current shared vehicle.

Specifically, the terminal device may be provided inside with a GPS positioning module, so that the terminal device may perform positioning by means of GPS. In this case, the obtained current position information may be longitude and latitude information of the position of the terminal device.

The terminal device may be further provided with a Wi-Fi module, so that the terminal device may perform positioning by means of Wi-Fi. Each Wi-Fi hotspot has a unique MAC address. After the terminal device enables Wi-Fi, the Wi-Fi module automatically scans for hotspots nearby and uploads position information of the hotspots, so that a huge hotspot position database is established. The database is a key to position the user. Each wireless router has a globally unique MAC address, and generally, the router does not move in a time period. When the terminal device enables Wi-Fi, that is, can scan and collect router signals nearby, regardless of whether a router is encrypted and whether the terminal device has connected to the router, or even if a signal is not strong enough to be displayed in a wireless signal list, a MAC address broadcasted by the router may be acquired. The data that is acquired by the terminal device to identify the router may be used as the current position information.

In addition, the terminal device may be further provided with a Bluetooth module, so that the terminal device may perform positioning by using a Bluetooth beacon. A Bluetooth beacon may be arranged in an environment. Each Bluetooth beacon has a universally unique identifier (UUID), and a position of Bluetooth beacon is fixed. When the terminal device is in a signal coverage area of the Bluetooth beacon, the terminal device may receive a broadcast data packet broadcasted by the Bluetooth beacon. The broadcast data packet includes a UUID of the Bluetooth beacon. The broadcast data packet acquired by the terminal device and a received signal strength indication (RSSI) value when the data packet is received may be used as the position information.

Further, the current position information is position information when the terminal device detects that there is a locking action of the current shared vehicle.

In step S130, the current position information is uploaded to a server so that the server determines a locking position of the current shared vehicle according to the current position information.

The server determines the locking position of the current shared vehicle according to the current position information uploaded by the terminal device, and displays the locking position on a vehicle map. The user may view the vehicle map by using an APP installed on the terminal device, to find the shared vehicle.

If the current position information is longitude and latitude information, the server may directly mark the locking position on the vehicle map.

If the current position information is data that can identify a router, the server needs to search for a geographic position of each router, calculate the locking position of the shared vehicle in combination with strength of each signal, and mark the locking position on the vehicle map.

If the current position information is a broadcast data packet and an RSSI value, the server may determine a position of a Bluetooth beacon according to a UUID in the broadcast data packet, calculate a distance between the shared vehicle and the Bluetooth beacon according to the RSSI value, determine the locking position of the shared vehicle according to a position of the Bluetooth beacon and the distance, and mark the locking position on the vehicle map.

Using the positioning method of the present invention, a shared vehicle without a GPS positioning module can be positioned. In this way, the hardware cost and power consumption of the shared vehicle can be reduced, and the service time of the battery of the shared vehicle can be extended, resulting in reducing maintenance cost of the shared vehicle.

Corresponding to the above method, the present invention further provides a shared vehicle positioning apparatus. Fig. 2 is a block diagram of an implementation structure of the shared vehicle positioning apparatus according to an embodiment of the present invention.

As shown in Fig. 2, the positioning apparatus 200 includes a detecting module 210 configured for detecting if there is a locking action of a current shared vehicle; a position acquiring module 220 configured for acquiring current position information of a terminal device using the current shared vehicle if a detection result of the detecting module is yes; and a position uploading module 230 configured for uploading the current position information to a server so that the server determines a locking position of the current shared vehicle based on the position information.

In the first embodiment of the present invention, the detecting module 210 is further configured for detecting if a first instruction for terminating vehicle use sent by the server is received, wherein the first instruction for terminating vehicle use is triggered when the current shared vehicle sends locking information to the server.

In the second embodiment of the present invention, the detecting module 210 is further configured for detecting if locking state information sent by the current shared vehicle to the terminal device is received.

In the third embodiment of the present invention, the detecting module 210 is further configured for detecting if a second instruction for terminating vehicle use input into the terminal device by a user is received.

The present invention further provides a terminal device. According to one aspect, the terminal device includes the above-described positioning apparatus 200 of the shared vehicle.

Fig. 3 is a block diagram of an implementation structure of the terminal device according to another aspect of the present invention.

As shown in Fig. 3, the terminal device 300 includes a memory 301 and a processor 302. The memory 301 stores instructions for controlling the processor 302 to perform the above shared vehicle positioning methods.

In addition, as shown in Fig. 3, the terminal device 300 further includes an interface device 303, an input device 304, a display device 305, a communication device 306, a speaker 307 and a microphone 308, and the like. Although multiple devices are shown in Fig. 3, the terminal device of the present invention may only relate to some of them, such as the memory 301, the processor 302, the communication device 306 and the like.

The communication device 306 may perform wired or wireless communication (such as using a WiFi network, 4G network, 3G network, or a GPRS network), for example.

The interface device 303 includes, for example, a USB interface.

The input device 304 includes, for example, a touch screen, keys and the like.

The display device 305 includes, for example, a liquid crystal display screen, a touch display screen and the like.

The terminal device of the present invention may be a mobile phone or other electronic products having a positioning function such as a tablet computer or the like.

According to the first aspect of the present invention, there is provided a shared vehicle positioning method, which comprises: detecting if there is a locking action of a current shared vehicle; if yes, acquiring current position information of a terminal device using the current shared vehicle.

According to the above positioning method of the first aspect, in the second aspect of the present invention, the step of detecting if there is a locking action of a current shared vehicle comprises: detecting if a first instruction for terminating vehicle use sent by the server is received, wherein the first instruction for terminating vehicle use is triggered when the current shared vehicle sends locking information to the server.

According to the above positioning method of the first and the second aspect, in the third aspect of the present invention, the step of detecting if there is a locking action of a current shared vehicle further comprises: detecting if locking state information sent by the current shared vehicle to the terminal device is received.

According to the above positioning method of any of the first to the third aspects, in the fourth aspect of the present invention, the step of detecting if there is a locking action of a current shared vehicle further comprises: detecting if a second instruction for terminating vehicle use input into the terminal device by a user is received.

According to the fifth aspect of the present invention, there is provided a shared vehicle positioning apparatus, which comprises: a detecting module configured for detecting if there is a locking action of a current shared vehicle; a position acquiring module configured for acquiring current position information of a terminal device using the current shared vehicle if a detection result of the detecting module is yes.

According to the above positioning apparatus of the fifth aspect, in the sixth aspect of the present invention, the detecting module is further configured for detecting if a first instruction for terminating vehicle use sent by the server is received, wherein the first instruction for terminating vehicle use is triggered when the current shared vehicle sends locking information to the server.

According to the above positioning apparatus of the fifth or the sixth aspect, in the seventh aspect of the present invention, the detecting module is further configured for detecting if locking state information sent by the current shared vehicle to the terminal device is received.

According to the above positioning apparatus of any of the fifth to the seventh aspects, in the eighth aspect of the present invention, the detecting module is further configured for detecting if a second instruction for terminating vehicle use input into the terminal device by a user is received.

According to the ninth aspect of the present invention, there is provided a terminal device including the positioning apparatus according to any of the fifth to eighth aspects.

According to the tenth aspect of the present invention, there is provided a terminal device comprising a memory and a processor, wherein the memory stores instructions for controlling the processor to perform operations to execute the positioning method according to any of the first to fourth aspects.

The above embodiments mainly focus on the differences relative to other embodiments. Those skilled in the art shall clearly understand that the above embodiments may be applied individually or in combination.

It should be noted that the respective embodiments of the present description are described in a progressive manner, the focus of each embodiment illustrates the differences from other embodiments, and the same or similar parts among the embodiments may refer to one another. However, those skilled in the art should understand that the above embodiments might be used individually or in combination according to the needs. In addition, as the device embodiments correspond to the method embodiments, the description of the former is relatively simpler, and the related parts may refer to the corresponding parts of the method embodiments. The above-described system embodiments are only illustrative. The modules in these systems described as separate components may be or may not be physically separated.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scene, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

It should be noted that the respective embodiments of the present description are described in a progressive manner, the focus of each embodiment illustrates the differences from other embodiments, and the same or similar parts among the embodiments may refer to one another. However, those skilled in the art should understand that the above embodiments may be used individually or in combination according to the needs. In addition, as the device embodiments correspond to the method embodiments, the description of the former is relatively simpler, and the related parts may refer to the corresponding parts of the method embodiments. The above-described device embodiments are only illustrative. The modules or units in these devices described may be or not physically separated.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present invention is defined by the attached claims.

## Claims

1. A shared vehicle positioning method, comprising:
detecting if there is a locking action of a current shared vehicle, if yes,
acquiring current position information of a terminal device using the current shared vehicle; and
uploading the current position information to a server so that the server determines a locking position of the current shared vehicle based on the current position information.

2. The positioning method of claim 1, wherein the step of detecting if there is a locking action of a current shared vehicle comprises: detecting if a first instruction for terminating vehicle use sent by the server is received, wherein the first termination instruction for terminating vehicle use is triggered when the current shared vehicle sends locking information to the server.

3. The positioning method of claim 1 or 2, wherein the step of detecting if there is a locking action of a current shared vehicle further comprises: detecting if locking state information sent by the current shared vehicle to the terminal device is received.

4. The positioning method of any of claims 1-3, wherein the step of detecting if there is a locking action of a current shared vehicle further comprises: detecting if a second termination instruction for terminating vehicle use input into the terminal device by a user is received.

5. A shared vehicle positioning apparatus, comprising:
a detecting module configured for detecting if there is a locking action of a current shared vehicle;
a position acquiring module configured for acquiring current position information of a terminal device using the current shared vehicle if a detection result of the detecting module is yes; and
a position uploading module configured for uploading the current position information to a server so that the server determines a locking position of the current shared vehicle based on the current position information.

6. The positioning apparatus of claim 5, wherein the detecting module is further configured for detecting if a first instruction for terminating vehicle use sent by the server is received, wherein the first instruction for terminating vehicle use is triggered when the current shared vehicle sends locking information to the server.

7. The positioning apparatus of claim 5 or 6, wherein the detecting module is further configured for detecting if locking state information sent by the current shared vehicle to the terminal device is received.

8. The positioning apparatus of any of claims 5-7, wherein the detecting module is further configured for detecting if a second instruction for terminating vehicle use input into the terminal device by a user is received.

9. A terminal device comprising a memory and a processor, wherein the memory stores instructions for controlling the processor to perform operations to execute the positioning method of any of claims 1-4.

10. A terminal device comprising the positioning apparatus of any of claims 5-8.
